# EUROPÄISCHE PATENTSCHRIFT

(11) **EP 1 222 010 B1**
(45) Veröffentlichungstag und Bekanntmachung des Hinweises auf die Patenterteilung: **31.03.2004**
(21) Anmeldenummer: 00979411.6
(22) Anmeldetag: 30.09.2000
(51) Int. Cl.: B01D 29/00

(54) **FLÜSSIGKEITSFILTER, INSBESONDERE ÖLFILTER**
LIQUID FILTER, ESPECIALLY AN OIL FILTER
FILTRE POUR LIQUIDE, NOTAMMENT FILTRE A HUILE

(30) Priorität: 23.10.1999 DE 19951084
(43) Veröffentlichungstag der Anmeldung: 17.07.2002
(73) Patentinhaber: MAHLE Filtersysteme GmbH, 70376 Stuttgart (DE)
(72) Erfinder: BAUMANN, Peter, 70565 Stuttgart (DE); BRIEDEN, Thomas, 71336 Waiblingen (DE); GEBERT, Hans, 74080 Heilbronn (DE); MONZIE, Benoît, 70469 Stuttgart (DE)
(74) Vertreter: Bernhard, Uwe
(86) Internationale Anmeldenummer: PCT/DE2000/003508
(87) Internationale Veröffentlichungsnummer: WO 2001/030478

(56) Entgegenhaltungen:
- EP-A- 0 640 369
- EP-A- 0 874 140
- DE-A- 19 754 243
- DE-A- 19 804 329
- DE-C- 19 835 525
- US-A- 4 698 164
- US-A- 5 814 215

## Beschreibung

Die Erfindung betrifft ein Flüssigkeitsfilter, insbesondere Ölfilter zum Reinigen von Schmieröl, insbesondere für Verbrennungsmotoren von Kraftfahrzeugen, mit den Merkmalen des Oberbegriffes des Anspruches 1.

Aus der DE 39 03 675 C2 ist ein Ölfilter bekannt, das ein im Einbauzustand im wesentlichen stehend angeordnetes Filtergehäuse aufweist, das in einem oberen Abschnitt einen Filteraufnahmeraum zur Unterbringung eines Ringfiltereinsatzes enthält und das in einem unteren Abschnitt einen Einlasskanal für ungereinigtes Öl und einen Auslasskanal für gereinigtes Öl enthält. Der Einlasskanal verbindet eine mit einer Druckseite einer Ölpumpe verbundene Zuleitung des Ölfilters mit einer Rohseite des Ringfiltereinsatzes im Filteraufnahmeraum. Der Auslasskanal verbindet eine Reinseite des Ringfiltereinsatzes im Filteraufnahmeraum mit einer mit den Schmierstellen einer Brennkraftmaschine kommunizierenden Ableitung des Ölfilters.

Ein Flüssigkeitsfilter der eingangs genannten Art ist grundsätzlich aus der EP 0 874 140 A1 bekannt und weist zusätzlich zu den vorstehend genannten Merkmalen einen Ölkühler auf, der in einen im unteren Abschnitt des Filtergehäuses ausgebildeten Ölkühleraufnahmeraum eingesetzt und mit dem Filtergehäuse verschraubt ist. Der Ölkühler enthält den Auslasskanal und verbleibt beim Wechseln des Ringfiltereinsatzes im Filtergehäuse.

Die US 5,814,215 zeigt ein weiteres Flüssigkeitsfilter, bei dem an der Innenseite eines auf das Filtergehäuse lösbar aufschraubbaren Deckels ein zentrales Trägerelement befestigt ist. Dieses Trägerelement ist in einem deckelnahen Axialabschnitt als Innenzarge ausgebildet. Der Ringfiltereinsatz ist an der vom Deckel abgewandten Seite auf das Trägerelement aufsteckbar. Das Filtergehäuse weist eine zentrale, sacklochartige Vertiefung auf, an die zentral unten eine Rücklaufleitung und oberhalb davon seitlich die Ableitung angeschlossen sind. Das Trägerelement besitzt einen uber den Ringfiltereinsatz axial vorstehenden, vom Deckel entfernten Axialabschnitt, der beim Aufschrauben des Deckels auf das Filtergehäuse in die genannte Vertiefung eindringt. Der vorstehende Axialabschnitt trägt am freien Ende einen Verschlusstopfen zum dichten Verschließen der Rücklaufleitung. Der in die Vertiefung eindringende Axialabschnitt des Trägerelements weist außerdem einen Dichtabschnitt auf, der oberhalb der Ableitung die Vertiefung gegenüber dem darüberliegenden Filtergehäuseinnenraum abdichtet. Innerhalb des Trägerelements ist ein Strömungsweg realisiert, der den reinseitigen Innenraum des als Innenzarge ausgebildeten Axialabschnitts mit der Vertiefung im Gehäuse verbindet. Zum Wechseln des Ringfiltereinsatzes wird der Deckel vom Filtergehäuse abgeschraubt, wobei das damit verbundene Trägerelement angehoben wird. Dadurch wird der Verschlusstopfen aus der Rücklaufleitung herausgezogen, so dass das Filtergehäuse vor dem Abnehmen des Deckels vollständig leerlaufen kann. Nach dem Herausnehmen des Trägerelements aus dem Filtergehäuse kann der Ringfiltereinsatz am Trägerelement gewechselt werden.

Bei den bekannten Flüssigkeitsfiltern wird das Filtergehäuse mit darin integrierten Kanälen einteilig als Spritzgußbauteil hergestellt. Das Gehäuse muß dann im Inneren nachbearbeitet werden, um beispielsweise glatte Flächen für Dichtungen bereitzustellen. Ebenso ist eine sorgfältige Oberflächenbearbeitung für den einzubringenden Ringfiltereinsatz erforderlich, um dessen zentralen Innenraum dicht an den entsprechenden Kanal, hier den reinseitigen Auslaßkanal anzubinden.

Die vorliegende Erfindung beschäftigt sich mit dem Problem, ein Filter der eingangs genannten Art hinsichtlich einer vereinfachten Bearbeitung auszugestalten.

Dieses Problem wird erfindungsgemäß durch ein Flüssigkeitsfilter mit den Merkmalen des Anspruches 1 gelöst.

Die Erfindung beruht auf dem allgemeinen Gedanken, diejenigen Bestandteile des Filtergehäuses, die bei einem herkömmlichen Filtergehäuse mit diesem einteilig hergestellt sind und zur Erfüllung ihrer Funktionen nachbearbeitet werden müssen, in einem separat herstellbaren Funktionsträgereinsatz zusammenzufassen. Auf diese Weise ergibt sich einerseits die Möglichkeit einer externen Nachbearbeitung dieser Funktionselemente, andererseits kann der Funktionsträgereinsatz auch so hergestellt werden, daß eine Nachbearbeitung entfallen kann. Beispielsweise ist der Funktionsträgereinsatz aus Kunststoff, insbesondere mittels eines Spritzgußverfahrens hergestellt. Die sich dabei ausbildende Oberflächengüte ist hinreichend hochwertig, so daß eine Nachbearbeitung regelmäßig entfallen kann.

Die in den Funktionsträgereinsatz integrierten Funktionselemente sind zumindest der Ablaßkanal, der die Reinseite des Ringfiltereinsatzes im Filteraufnahmeraum mit der Ableitung des Flüssigkeitsfilters verbindet. Ebenso können folgende Funktionselemente in den Funktionsträgereinsatz integriert sein: Der die Zuleitung des Flüssigkeitsfilters mit der Rohseite des Ringfiltereinsatzes im Filteraufnahmeraum verbindende Einlaßkanal und/oder ein das Abfließen der Flüssigkeit aus dem Filteraufnahmeraum ermöglichender Leerlaufkanal und/oder ein dem Einlaßkanal zugeordnetes Rücklaufsperrventil und/oder ein den Auslaßkanal mit dem Leerlaufkanal druckabhängig verbindendes Druckregelventil und/oder ein den Einlaßkanal mit dem Auslaßkanal druckabhängig verbindendes Umgehungsventil. Je mehr Funktionselemente des Filtergehäuses in den Funktionsträgereinsatz integriert sind, desto stärker wirken sich die Vorteile der Erfindung aus, so dass weniger Nachbearbeitungsaufwand für das Filtergehäuse erforderlich ist.

Bei einer bevorzugten Ausführungsform bildet ein im unteren Abschnitt des Filtergehäuses ausgebildeter Trägeraufnahmeraum, in den der Funktionsträgereinsatz eingesetzt ist, den Einlaßkanal, so daß die ungereinigte Flüssigkeit den Funktionsträgereinsatz und den Ringfiltereinsatz außen umströmt. Durch diese Bauweise kann der für den Funktionsträgereinsatz vorgesehene Trägeraufnahmeraum als Funktionselement ausgenutzt werden, so daß dieser insoweit eine Doppelfunktion ausführt.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Ansicht in auseinandergezogener Anordnung der einzelnen Bestandteile eines erfindungsgemäßen Flüssigkeitsfilters und
- Fig. 2: eine Seitenansicht auf ein zusätzliches Bauteil.

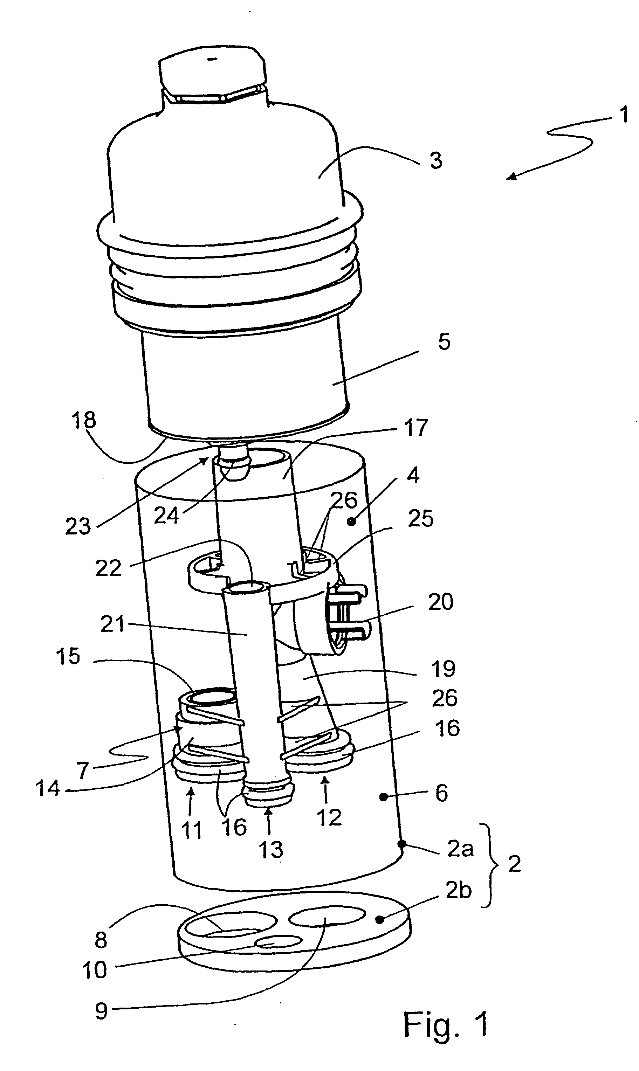

Entsprechend Fig. 1 weist ein erfindungsgemäßes Flüssigkeitsfilter 1 ein Filtergehäuse 2 auf, das zweckmäßigerweise einteilig, insbesondere als Aluminiumdruckgußbauteil, hergestellt ist. In Fig. 1 sind jedoch zur besseren Veranschaulichung ein zylindrischer Tubusbestandteil 2a und ein unten daran anschließender Sockelbestandteil 2b getrennt voneinander dargestellt. Die Einheit dieser beiden Bestandteile ist in Fig. 1 durch eine geschweifte Klammer symbolisiert. Der Tubusbestandteil 2a ist ebenfalls aus Gründen einer verbesserten Darstellung durchsichtig wiedergegeben. Das Filtergehäuse 2 ist an seiner Oberseite durch einen aufschraubbaren Deckel 3 verschließbar.

In einem oberen Abschnitt des Tubusbestandteils 2a ist ein Filteraufnahmeraum 4 ausgebildet, in den im zusammengebauten Zustand des Filters 1 ein Ringfiltereinsatz 5 eingesetzt ist. Der Ringfiltereinsatz 5 ist im vorliegenden Ausführungsbeispiel so ausgebildet, daß er radial von außen nach innen von der zu reinigenden Flüssigkeit durchspült wird. Der Ringfiltereinsatz 5 ist im Inneren des Deckels 3 axial fixiert und drehbar gelagert, so daß der Ringfiltereinsatz 5 wie in Fig. 1 dargestellt gleichzeitig mit dem Aufsetzen des Deckels 3 in das Filtergehäuse 2 eingeführt wird.

In einem unteren Abschnitt des Tubusbestandteils 2a ist ein Trägeraufnahmeraum 6 ausgebildet, in dem im zusammengebauten Zustand des Filters 1 ein Funktionsträgereinsatz 7 untergebracht ist. Im Sockelbestandteil 2b befinden sich mehrere nach oben offene Leitungen, nämlich eine Zuleitung 8, die beispielsweise mit einer Druckseite einer Ölpumpe kommuniziert, einer Ableitung 9, die mit den entsprechenden Schmierstellen einer Brennkraftmaschine kommuniziert, und einer Rücklaufleitung 10, die beispielsweise mit einem relativ drucklosen Reservoir, z.B. mit einer Ölwanne, kommuniziert. Die nach oben offenen Leitungen 8, 9, 10 bilden Aufnahmen für korrespondierende Stutzen 11, 12, 13, die am Funktionsträgereinsatz 7 ausgebildet sind. Radial wirkende Dichtmittel, hier O-Ringe 16, gewährleisten eine wirksame Abdichtung der Stutzen 11, 12, 13 in den zugehörigen Leitungen 8, 9, 10.

Der Funktionsträgereinsatz 7 weist einen Einlaßkanalabschnitt 14 auf, der ein Rücklaufsperrventil 15 enthält und mit dem Stutzen 11 in die Öffnung der Zuleitung 8 einsteckbar ist. Auf diese Weise tritt das ungereinigte Öl (Rohöl) durch das Rücklaufsperrventil 15 in den Trägeraufnahmeraum 6 sowie in den Filteraufnahmeraum 4 ein und umspült somit den Funktionsträgereinsatz 7 sowie den Ringfiltereinsatz 5. Bei dieser Ausführungsform bildet daher der Trägeraufnahmeraum 6 einen Einlaßkanal für ungereinigte Flüssigkeit, der die Zuleitung 8 des Filters 1 mit einer Rohseite des Ringfilterelements 5 im Filteraufnahmeraum 4 verbindet.

Der Funktionsträgereinsatz 7 weist an seinem oberen Ende einen Zentralstutzen 17 auf, auf den der Ringfiltereinsatz 5 aufgesteckt wird, wodurch sich eine kommunizierende Verbindung mit einem die Reinseite des Ringfiltereinsatzes 5 bildenden Innenraum des Ringfiltereinsatzes 5 ausbildet. Zu diesem Zweck enthält der Ringfiltereinsatz 5 zweckmäßigerweise eine mit einer zentrischen Öffnung ausgestattete untere Endscheibe 18, die mit entsprechenden Dichtungsmitteln ausgestattet ist.

Der Funktionsträgereinsatz 7 weist außerdem einen Auslaßkanal 19 auf, der einenends mit dem Zentralstutzen 17 und anderenends mit dem Stutzen 12 ausgestattet ist, so daß der Auslaßkanal 19, wenn er mit seinem Stutzen 12 in die Öffnung der Ableitung 9 eingesteckt ist, über den Zentralstutzen 17 die Reinseite des Ringfiltereinsatzes 5 mit der Ableitung 9 des Filters 1 verbindet. Zwischen seinen Enden weist der Auslaßkanal 19 ein Umgehungsventil 20 auf, das oberhalb eines Schwellwertes für einen Rohöldruck im Einlaßkanal bzw. im Trägeraufnahmeraum 6 öffnet und den Trägeraufnahmeraum 6 mit dem Auslaßkanal 19 verbindet, so daß das Rohöl bei einem kritischen Druckanstieg unter Umgehung des Ringfiltereinsatzes 5 in die Reinseite, das heißt zum gereinigten Öl (Reinöl) in die Ableitung 9 abströmen kann.

Der Funktionsträgereinsatz 7 weist außerdem einen Leerlaufkanal 21 auf, der an seinem unteren Ende den Stutzen 13 und an seinem oberen Ende eine Öffnung 22 aufweist, in welche bei in das Filtergehäuse 2 eingesetzten Ringfiltereinsatz 5 ein Zapfen 23 dichtend eindringt, der mit entsprechenden Dichtmitteln, z.B. ein O-Ring 24, ausgestattet ist. Der Zapfen 23 ist hierbei an der Endscheibe 18 ausgebildet und steht von dieser axial und exzentrisch nach unten ab. Der Ringfiltereinsatz 5 ist derart mit dem Deckel 3 gekoppelt, daß beim Entfernen des Deckels 3 vom Gehäuse 2 der Ringfiltereinsatz 5 gleichzeitig aus dem Gehäuse 2 herausgezogen wird. Dabei gibt der Zapfen 23 die Öffnung 22 des Leerlaufkanals 21 frei, so daß der Filteraufnahmeraum 4 über die Rücklaufleitung 10 leerlaufen kann. Die axiale Höhe der Öffnung 22 bildet somit die untere Grenze des Filteraufnahmeraumes 4. Um das Einsetzen des Ringfiltereinsatzes 5 in das Filtergehäuse 2 zu vereinfachen, ist am Funktionsträgereinsatz 7 eine Rampe 25 ausgebildet, deren unteres Ende an der Öffnung 22 des Leerlaufkanals 21 auf der axialen Höhe dieser Öffnung 22 beginnt. Die Rampe 25 steigt dann entlang ihrer Rampenlänge in axialer Richtung in den Filteraufnahmeraum 4 hinein an und endet wiederum an der Öffnung 22, jedoch auf einem axial höheren Niveau. Die Rampe 25 weist somit eine Schraubenform mit einer einzigen im wesentlichen vollständigen Windung auf.

Zwischen den einzelnen Funktionselementen des Funktionsträgereinsatzes 7, wie z.B. Einlaßkanalabschnitt 14, Auslaßkanal 19, Zentralstutzen 17, Rampe 25, Leerlaufkanal 21, sind Stege 26 ausgebildet, durch die die Funktionselemente des Funktionsträgereinsatzes miteinander verbunden sind. Der Funktionsträgereinsatz 7 ist in einer bevorzugten Ausführungsform weitestgehend aus Kunststoff, insbesondere durch ein Spritzgußverfahren, hergestellt.

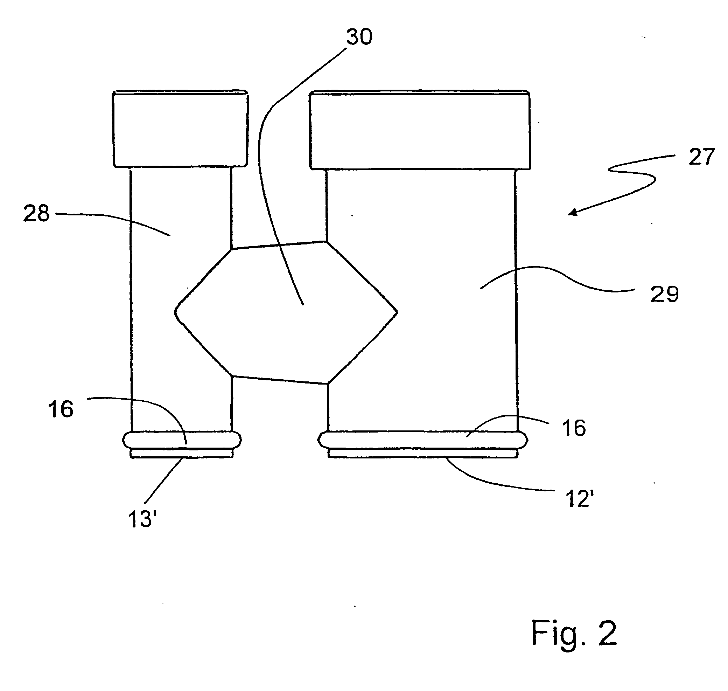

Entsprechend Fig. 2 kann bei einer alternativen Ausführungsform ein im wesentlichen H-förmiges Bauteil 27 als zusätzliches Funktionselement ausgebildet sein, das an die Stutzen 12 und 13 des Auslaßkanals 19 bzw. des Leerlaufkanals 21 durch Aufstecken anschließbar ist. Auf diese Weise werden sowohl der Leerlaufkanal 21 durch einen Leerlaufkanalabschnitt 28 als auch der Auslaßkanal 19 durch einen Auslaßkanalabschnitt 29 verlängert, die ihrerseits über entsprechende Stutzen 12' bzw. 13' verfügen. Das Bauteil 27 weist außerdem ein Druckregelventil 30 auf, das druckabhängig eine Verbindung zwischen dem Leerlaufkanalabschnitt 28 und dem Auslaßkanalabschnitt 29 schafft, um bei einem kritischen Druckanstieg auf der Reinseite eine Entspannung in die Rücklaufleitung 10 zu ermöglichen. Es ist klar, daß bei der Verwendung dieses Bauteils 27 auch der Anschluß des Einlaßkanalabschnittes 14 durch ein entsprechendes Verlängerungsstück mit der Zuleitung 8 verbunden wird bzw. die Kanäle 19 und 21 entsprechend verkürzt werden.

Die Stutzen 11, 12, 13 des Einlaßkanalabschnitts 14, des Leerlaufkanals 21 und des Auslaßkanals 19 sind jeweils axial in die zugehörigen Öffnungen der Zuleitung 8, der Rücklaufleitung 10 bzw. der Ableitung 9 einsteckbar, so daß der Funktionsträgereinsatz 7 in axialer Richtung in das Filtergehäuse 2 einsteckbar ist. In entsprechender Weise ist auch der Ringfiltereinsatz 5 auf den Funktionsträgereinsatz 7 in axialer Richtung aufsteckbar, wobei einerseits der Zentralstutzen 17 in die zentrische Öffnung der Endscheibe 18 eindringt und andererseits der Zapfen 23 in die Öffnung 20 des Leerlaufkanals 21 dichtend eindringt.

## Patentansprüche

1. Flüssigkeitsfilter, insbesondere Ölfilter zum Reinigen von Schmieröl, insbesondere für Verbrennungsmotoren von Kraftfahrzeugen, mit einem im Einbauzustand im wesentlichen stehend angeordneten Filtergehäuse (2), das in einem oberen Abschnitt einen Filteraufnahmeraum (4) zur Unterbringung eines Ringfiltereinsatzes (5) enthält und das in einem unteren Abschnitt einen Einlaßkanal (6, 14) für ungereinigte Flüssigkeit, der eine Zuleitung (8) des Flüssigkeitsfilters (1) mit einer Rohseite des Ringfiltereinsatzes (5) im Filteraufnahmeraum (4) verbindet, und einen Auslaßkanal (19) für gereinigte Flüssigkeit enthält, der eine Reinseite des Ringfiltereinsatzes (5) im Filteraufnahmeraum (4) mit einer Ableitung (9) des Flüssigkeitsfilters (1) verbindet, wobei ein Funktionsträgereinsatz (7) vorgesehen ist, der in einem im unteren Abschnitt des Filtergehäuses (2) ausgebildeten Trägeraufnahmeraum (6) angeordnet ist und der den Auslaßkanal (19) enthält,
**dadurch gekennzeichnet,**
**dass** der Funktionsträgereinsatz (7) in den Trägeraufnahmeraum (6) einsetzbar ausgebildet ist und
einen Leerlaufkanal (21) enthält, der ein Abfließen der Flüssigkeit aus dem Filteraufnahmeraum (4) ermöglicht.

2. Flüssigkeitsfilter nach Anspruch 1,
**dadurch gekennzeichnet,**
**dass** der Funktionsträgereinsatz (7) ein Rücklaufsperrventil (15) enthält, das dem Einlaßkanal (6, 14) zugeordnet ist und einen Flüssigkeitsrücklauf aus der Rohseite des Ringfiltereinsatzes (5) im Filteraufnahmeraum (4) in die Zuleitung (8) des Flüssigkeitsfilters (1) sperrt.

3. Flüssigkeitsfilter nach Anspruch 1 oder 2,
**dadurch gekennzeichnet,**
**dass** der Auslaßkanal (19) mit einem zentralen Innenraum des Ringfiltereinsatzes (5) kommuniziert und dass der Trägeraufnahmeraum (6) den Einlaßkanal bildet, so dass die ungereinigte Flüssigkeit den Funktionsträgereinsatz (7) und den Ringfiltereinsatz (5) umspült.

4. Flüssigkeitsfilter nach Anspruch 1 oder 2,
**dadurch gekennzeichnet,**
**dass** der Funktionsträgereinsatz (7) den Einlaßkanal oder einen Einlaßkanalabschnitt (14) enthält.

5. Flüssigkeitsfilter nach einem der Ansprüche 1 bis 4,
**dadurch gekennzeichnet,**
**dass** der Funktionsträgereinsatz (7) ein Druckregelventil (30) enthält, das druckabhängig den Auslaßkanal (19, 29) mit dem Leerlaufkanal (21, 28) verbindet.

6. Flüssigkeitsfilter nach einem der Ansprüche 1 bis 5,
**dadurch gekennzeichnet,**
**dass** das Druckregelventil (30) in einem H-förmigen Bauteil (27) ausgebildet ist, das an der Unterseite des Funktionsträgereinsatzes (7) auf die Anschlüsse (12, 13) des Auslaßkanals (19) und des Leerlaufkanals (21) aufsteckbar ist.

7. Flüssigkeitsfilter nach einem der Ansprüche 1 bis 6,
**dadurch gekennzeichnet,**
**dass** der Funktionsträgereinsatz (7) ein Umgehungsventil (20) enthält, das druckabhängig den Einlaßkanal (6, 14) mit dem Auslaßkanal (19) verbindet.

8. Flüssigkeitsfilter nach einem der Ansprüche 1 bis 7,
**dadurch gekennzeichnet,**
**dass** am Ringfiltereinsatz (5) ein exzentrisch, axial nach unten abstehender Zapfen (23) angebracht ist, der bei in den Filteraufnahmeraum (4) eingesetztem Ringfiltereinsatz (5) in eine Öffnung (22) des Leerlaufkanals (21) eindringt und diesen verschließt, dass der Funktionsträgereinsatz (7) eine Rampe (25) aufweist, die mit einem unteren Ende an der Öffnung (22) des Leerlaufkanals (21) in deren axialen Ebene beginnt und mit zunehmender Rampenlänge in das Innere des Filteraufnahmeraumes (4) vorstehend ansteigt, dass die Rampe (25) und der Zapfen (23) hinsichtlich ihrer Positionierung so aufeinander abgestimmt sind, das beim Einsetzen des Ringfiltereinsatzes (5) in das Filtergehäuse (2) der Zapfen (23) - solange er noch nicht in die Öffnung (22) des Leerlaufkanals (21) eingedrungen ist - auf der Rampe (25) aufliegt und bei Drehung des Ringfilterelements (5) nach unten abgleitet und am unteren Ende der Rampe (25) in die Öffnung (22) des Leerlaufkanals (21) eindringt.

9. Flüssigkeitsfilter nach einem der Ansprüche 1 bis 8,
**dadurch gekennzeichnet,**
**dass** der Funktionsträgereinsatz (7) aus Kunststoff hergestellt ist.

10. Flüssigkeitsfilter nach einem der Ansprüche 1 bis 9,
**dadurch gekennzeichnet,**
**dass** jede Verbindung zwischen einem Kanal (14, 21, 19) des Funktionsträgereinsatzes (7) und einer korrespondierenden, im Boden des Filtergehäuses (2) ausgebildeten Leitung (8, 9, 10) als Steckverbindung ausgebildet ist.

## Claims

1. A liquid filter, especially an oil filter for cleaning lubricating oil, especially for internal combustion engines for motor vehicles, with a filter housing (2) which is arranged essentially upright in the installed state and which contains in an upper section a filter receiving space (4) for accommodating a ring-shaped filter insert (5) and which contains in a lower section an inlet channel (6, 14) for unclean liquid, thus connecting an inlet line (8) of the liquid filter (1) to an unclean side of the ring-shaped filter insert (5) in the filter receiving space (4), and it has an outlet channel (19) for cleaned liquid, connecting a clean side of the ring-shaped filter insert (5) in the filter receiving space (4) to a drain line (9) of the liquid filter (1), with a function carrier insert (7) being provided, arranged in a carrier holding space (6) designed in the lower section of the filter housing (2) and containing the outlet channel (19), **characterized in that** the function carrier insert (7) is designed so that it can be inserted into the carrier holding space (6), and contains an emptying channel (21) which allows the liquid to run out of the filter receiving space (4).

2. The liquid filter according to claim 1, **characterized in that** the function carrier insert (7) contains a return-flow-blocking valve (15) which is provided for the inlet channel (6, 14) and blocks a return flow of liquid out of the unclean side of the ring-shaped filter insert (5) in the filter receiving space (4) into the inlet line (8) of the liquid filter (1).

3. The liquid filter according to claim 1 or 2, **characterized in that** the outlet channel (19) communicates with a central interior of the ring-shaped filter insert (5), and the carrier holding space (6) forms the inlet channel so that unclean liquid flows around the function carrier insert (7) and the ring-shaped filter insert (5).

4. The liquid filter according to claim 1 or 2, **characterized in that** the function carrier insert (7) contains the inlet channel or an inlet channel section (14).

5. The liquid filter according to one of claims 1 through 4, **characterized in that** the function carrier insert (7) contains a pressure-regulating valve (30) which connects the outlet channel (19, 29) to the emptying channel (21, 28) as a function of the pressure.

6. The liquid filter according to one of claims 1 through 5, **characterized in that** the pressure-regulating valve (30) is designed as an H-shaped component (27) which can be attached to the connections (12, 13) of the outlet channel (19) and the emptying channel (21) on the lower side of the function carrier insert (7).

7. The liquid filter according to one of claims 1 through 6, **characterized in that** the function carrier insert (7) contains a bypass valve (20) which connects the inlet channel (6, 14) to the outlet channel (19) as a function of pressure.

8. The liquid filter according to one of claims 1 through 7, **characterized in that** an eccentric journal (23) projecting axially downward is mounted on the ring-shaped filter insert (5) and when the ring-shaped filter insert (5) is inserted into the filter receiving space (4), the journal penetrates into an opening (22) in the emptying channel (21) and seals it; the function carrier insert (7) has a ramp (25) which begins with a lower end at the opening (22) in the emptying channel (21) in its axial plane and rises into the interior of the filter receiving space (4) with an increase in the ramp length; the positioning of the ramp (25) and the journal (23) are coordinated so that when the ring-shaped filter insert (5) is inserted into the filter housing (2), the journal (23) rests on the ramp (25) as long as it has not yet penetrated into the opening (22) in the emptying channel (21) and slides downward with a rotation of the ring-shaped filter element (5) and penetrates into the opening (22) in the emptying channel (21) at the lower end of the ramp (25).

9. The liquid filter according to one of claims 1 through 8, **characterized in that** the function carrier insert (7) is made of plastic.

10. The liquid filter according to one of claims 1 through 9, **characterized in that** each connection between a channel (14, 21, 19) of the function carrier insert (7) and a corresponding line (8, 9, 10) provided in the bottom of the filter housing (2) is designed as a plug connection.

## Revendications

1. Filtre pour liquide, en particulier filtre à huile pour l'épuration d'huile de graissage, notamment pour des moteurs à combustion interne de véhicules automobiles, comprenant un boîtier filtrant (2) disposé de façon essentiellement verticale à l'état de montage, qui comporte dans une section supérieure un espace de réception de filtre (4) pour loger une cartouche filtrante annulaire (5), et comporte dans une section inférieure un canal d'admission (6, 14) pour du liquide non épuré, qui relie une conduite d'alimentation (8) du filtre pour liquide (1) à un côté brut de la cartouche filtrante annulaire (5) dans l'espace de réception de filtre (4), et un canal d'évacuation (19) pour du liquide épuré, qui relie un côté épuré de la cartouche filtrante annulaire (5) dans l'espace de réception de filtre (4) à une conduite d'évacuation (9) du filtre pour liquide (1), une cartouche support fonctionnelle (7) étant prévue, qui est disposée dans un espace de réception support (6) réalisé dans la section inférieure du boîtier filtrant (2), et comporte le canal d'évacuation (19), **caractérisé en ce que** la cartouche support fonctionnelle (7) est réalisée avec une possibilité de mise en place dans l'espace de réception support (6) et comporte un canal de marche à vide (21), qui permet un écoulement'du liquide hors de l'espace de réception de filtre (4).

2. Filtre pour liquide suivant la revendication 1, **caractérisé en ce que** la cartouche support fonctionnelle (7) comporte une soupape anti-retour (15), qui est associée au canal d'admission (6, 14) et ferme un retour de liquide du côté brut de la cartouche filtrante annulaire (5), dans l'espace de réception de filtre (4), dans la conduite d'alimentation (8) du filtre pour liquide (1).

3. Filtre pour liquide suivant l'une des revendications 1 et 2, **caractérisé en ce que** le canal d'évacuation (19) communique avec un espace intérieur central de la cartouche filtrante annulaire (5) et que l'espace de réception support (6) forme le canal d'admission, de sorte que le liquide non épuré circule autour de la cartouche support fonctionnelle (7) et de la cartouche filtrante annulaire (5). ,

4. Filtre pour liquide suivant l'une des revendications 1 et 2, **caractérisé en ce que** la cartouche support fonctionnelle (7) comporte le canal d'admission ou une section de canal d'admission (14).

5. Filtre pour liquide suivant l'une des revendications 1 à 4, **caractérisé en ce que** la cartouche support fonctionnelle (7) comporte une soupape de régulation de pression (30), qui relie en fonction de la pression le canal d'évacuation (19, 29) au canal de marche à vide (21, 28).

6. Filtre pour liquide suivant l'une des revendications 1 à 5, **caractérisé en ce que** la soupape de régulation de pression (30) est réalisée dans un composant en H (27) qui peut être emmanché, sur le côté inférieur de la cartouche support fonctionnelle (7), sur les raccords (12, 13) du canal d'évacuation (19) et du canal de marche à vide (21).

7. Filtre pour liquide suivant l'une des revendications 1 à 6, **caractérisé en ce que** la cartouche support fonctionnelle (7) comporte une soupape de bipasse (20), qui relie en fonction de la pression le canal d'admission (6, 14) au canal d'évacuation (19).

8. Filtre pour liquide suivant l'une des revendications 1 à 7, **caractérisé en ce qu'**un tourillon (23) excentré, dépassant axialement vers le bas, est monté sur la cartouche filtrante annulaire (5), ce tourillon pénétrant dans une ouverture (22) du canal de marche à vide (21) et fermant ce dernier lorsque la cartouche filtrante annulaire (5) est mise en place dans l'espace de réception de filtre (4), que la cartouche support fonctionnelle (7) présente une rampe (25), qui commence par une extrémité inférieure sur l'ouverture (22) du canal de marche à vide (21) dans le plan axial de cette dernière et s'élève avec une longueur de rampe croissante en dépassant dans l'intérieur de l'espace de réception de filtre (4), que la rampe (25) et le tourillon (23) sont mutuellement adaptés quant à leur positionnement de sorte que, lors de la mise en place de la cartouche filtrante annulaire (5) dans le boîtier filtrant (2), le tourillon (23) - tant qu'il n'a pas encore pénétré dans l'ouverture (22) du canal de marche à vide (21) - s'applique sur la rampe (25), glisse vers le bas lors de la rotation de l'élément filtrant annulaire (5), et pénètre sur l'extrémité inférieure de la rampe (25) dans l'ouverture (22) du canal de marche à vide (21).

9. Filtre pour liquide suivant l'une des revendications 1 à 8, **caractérisé en ce que** la cartouche support fonctionnelle (7) est fabriquée en matière plastique.

10. Filtre pour liquide suivant l'une des revendications 1 à 9, **caractérisé en ce que** chaque jonction entre un canal (14, 21, 19) de la cartouche support fonctionnelle (7) et une conduite (8, 9, 10) correspondante, réalisée dans le fond du boîtier filtrant (2), est réalisée sous forme d'assemblage à emboîtement.
